# EUROPÄISCHE PATENTANMELDUNG

(11) **EP 0 585 548 A1**
(43) Veröffentlichungstag der Anmeldung: **09.03.1994**
(21) Anmeldenummer: 93109264.7
(22) Anmeldetag: 09.06.1993
(51) Int. Cl.: G06F 13/40

(54) **Feldstation für ein von einem Steuercomputer gesteuertes serielles Bussystem**

(30) Priorität: 04.09.1992 DE 4229644
(71) Anmelder: FRIEDRICH LÜTZE ELEKTRO GESELLSCHAFT MIT BESCHRÄNKTER HAFTUNG, D-71384 Weinstadt (DE)
(72) Erfinder: Haussman Jörg, Dipl.-Ing (FH), D-7060 Schorndorf-Weiler (DE)
(74) Vertreter: Abel, Martin, Dipl.-Ing.

(57) **Zusammenfassung**

Es wird eine Feldstation (10) für ein von einem Steuercomputer gesteuertes serielles Bussystem vorgeschlagen, die mit einer Stromversorgungseinrichtung, mit wenigstens einer Eingabe-/Ausgabeeinrichtung, an die externe zu steuernde und/oder zu überwachende Einrichtungen anschließbar sind, und mit einer an den seriellen Bus anschließbaren und die Kommunikation zwischen diesem und der wenigstens einen Eingabe-/Ausgabeeinrichtung herstellenden Kommunikations- und Steuereinrichtung versehen ist. In einer Haltevorrichtung (18) ist eine mehrere, durch interne Bus-und Versorgungsleitungen verbundene Steckplätze (28) aufweisende Verteilereinrichtung (23) angeordnet. Die Versorgungseinrichtung, die wenigstens eine Eingabe-/Ausgabeeinrichtung und die Kommunikations- und Steuereinrichtung sind als in die Steckplätze (28) einsteckbare Steckmodule (15) ausgebildet. Das wenigstens eine Eingabe-/Ausgabe-Steckmodul (15) ist mit Steuer- und/oder Überwachungsanschlüssen (53) für die externen zu steuernden und/oder zu überwachenden Einrichtungen versehen. Bei dieser modulartig aufgebauten Feldstation (10) können einzelne Steckmodule in einfacher Weise ohne Veränderung von Leitungsanschlüssen ausgetauscht und montiert werden, wobei verschiedenartige Steckmodule in beliebiger Anordnung auf einfache Weise an die Bus- und Versorgungsleitungen anschließbar sind.

## Beschreibung

Die Erfindung betrifft eine Feldstation für ein von einem Steuercomputer gesteuertes serielles Bussystem, mit einer Stromversorgungseinrichtung, mit Wenigstens einer Eingabe-/Ausgabeeinrichtung, an die externe Zu steuernde und/oder Zu überwachende Einrichtungen anschließbar sind, und mit einer an den seriellen Bus anschließbaren und die Kommunikation Zwischen diesem und der Wenigstens einen Eingabe-/Ausgabeeinrichtung herstellenden Kommunikations- und Steuereinrichtung.

Hierarchisch gegliederte serielle Bussysteme (LAN: Local Area Network) sind in verschiedenen Ausführungen bekannt und werden auch bereits praktisch eingesetzt, wie z.B. die Systeme MAP, Ethernet, Tokenring, Profibus usw. Die seriellen Busleitungen sind dabei als elektrische Leitungen oder optische Leitungen, z.B. Lichtwellenleiterringe, ausgebildet. Die gesamten physikalischen Ein-/Ausgabevorgänge finden in den an den Bus angeschlossenen Feldstationen statt, wobei der Zentralcomputer bzw. das automatische Steuergerät über den Bus oder Feldbus mit den Feldstationen kommuniziert, an die dann Endschalter, Näherungsschalter, Taster, Wächter, Magnetventile, Schütze, Kupplungen, Bremsen, Anzeigen, Motoren, Sensoren Zur Messung verschiedenster Parameter, Anzeigevorrichtungen, Drucker, Terminals, Peripheriegeräte u.dgl. angeschlossen sind.

In bekannter Weise werden die Feldstationen für die sehr Zahlreichen verschiedenartigen Anwendungsmöglichkeiten jeweils individuell angepaßt und programmiert, wobei Änderungen und spätere Ergänzungen nur mit großem Aufwand durchgeführt werden können, sofern sie nicht von vornherein als Reserve berücksichtigt waren. Selbst geringfügige Änderungen erfordern daher einen großen Montage und Verdrahtungsaufwand, so daß oft ein Austausch der gesamten Feldstation noch kostengünstiger ist.

Es ist daher eine Aufgabe der Erfindung, eine Feldstation für ein serielles Bussystem der eingangs genannten Gattung zu schaffen, bei dem Änderungen und Ergänzungen der Anschlußkomponenten schnell, einfach und kostengünstig realisiert werden können.

Diese Aufgabe wird erfindungsgemäß dadurch gelöst, daß in einer Haltevorrichtung eine mehrere durch interne Bus- und Versorgungsleitungen verbundene Steckplätze aufweisende Verteilereinrichtung angeordnet ist, daß die Stromversorgungseinrichtung, die wenigstens eine Eingabe-/Ausgabeeinrichtung und die Kommunikations- und Steuereinrichtung als in die Steckplätze einsteckbare Steckmodule ausgebildet sind und daß die wenigstens eine Eingabe-/Ausgabeeinrichtung mit Steuer- und/oder Überwachungsanschlüssen für die externen zu steuernden und/oder zu überwachenden Einrichtungen versehen ist.

Die Vorteile dieser Feldstation bestehen insbesondere darin, daß bei geänderten Anforderungen lediglich Steckmodule, insbesondere für die Eingabe bzw. Ausgabe, ausgetauscht werden brauchen, wobei die Verteilereinrichtung von vornherein noch freie Steckplätze als Reserve aufweisen kann, in die nachträglich zur Erweiterung noch Steckmodule für weitere Eingaben oder Ausgaben eingesteckt werden können. Eine vergrößerte Verteilereinrichtung mit freien Reservesteckplätzen bedeutet kostenmäßig so gut wie keinen Mehraufwand. Bei einer Erweiterung oder bei einem Austausch von Eingabe-/Ausgabe-Steckmodulen können die als Stromversorgungseinrichtung und als Kommunikations- und Steuereinrichtung ausgebildeten Steckmodule beibehalten werden, wobei eventuell die Kommunikations- und Steuereinrichtung einer Umprogrammierung bedarf. Ein derartiger Austausch oder ein Hinzufügen weiterer Steckmodule kann durch Um- bzw. Einstecken schnell und problemlos und damit kostengünstig erfolgen. Durch das Ein- und Umstecken der Steckmodule sind sofort sämtliche Anschlüsse über die Verteilereinrichtung hergestellt, so daß weder bei der ursprünglichen Konzipierung noch bei einer Änderung oder Ergänzung ein Verdrahtungsaufwand erforderlich ist.

Durch die in den Unteransprüchen aufgeführten Maßnahmen sind vorteilhafte Weiterbildungen und Verbesserungen der im Anspruch 1 angegebenen Feldstation möglich.

Die Verteilereinrichtung ist zweckmäßigerweise als Leiterplatte ausgebildet, wodurch keinerlei Verdrahtungsaufwand für die feldstationinternen Bus- und Versorgungsleitungen erforderlich ist.

Um die Stromversorgung der externen Einrichtungen sicherzustellen und die entsprechenden Anschlüsse sicher und übersichtlich vornehmen zu können, ist jedem Eingabe-/Ausgabe-Steckmodul wenigstens ein Anschlußelement zugeordnet, das Stromversorgungsanschlüsse für die mit diesem Eingabe-/Ausgabe-Steckmodul verbundenen externen Einrichtungen aufweist, wobei alle Anschlußelemente stromversorgungsmäßig miteinander verbunden sind.

Die Haltevorrichtung ist in vorteilhafter Weise als Profilschiene mit im wesentlichen U-förmigem Querschnitt ausgebildet, die Halterungen zur Aufnahme der Verteilereinrichtung im Innenbereich aufweist. Diese Halterungen sind zweckmäßigerweise als Längsnuten zum einfachen Einschieben der Verteilereinrichtung ausgebildet. Diese Profilschiene kann in jeder gewünschten Länge abgeschnitten werden, die ausreichend für die Aufnahme der gewünschten Steckmodule ist. Die als Leiterplatte ausgebildete Verteilereinrichtung wird dann ebenfalls in der entsprechenden Länge hergestellt.

Um gleichzeitig eine Abschirmung für den Anschlußbereich und die internen Busleitungen zu erzielen, besteht die Profilschiene zweckmäßigerweise aus Metall, wodurch auch die erforderliche Festigkeit gewährleistet ist.

Durchgehende Längskanäle in den Profilschienen dienen als Schraub- oder Steckaufnahmen zur Befestigung von Abschlußelementen und/oder von Profilschienen in Längsrichtung aneinander. Diese Abschlußelemente sind vorzugsweise als Abschlußplatten ausgebildet, die auch mit Haltefüßen oder -leisten zur Befestigung der Feldstation versehen sein können. Durch einfache Kombination der Profilschiene mit zwei Abschlußelementen wird dadurch ein in seiner Länge variables Steckgehäuse zur Aufnahme der Steckmodule gebildet. Am Steckgehäuse können auch in vorteilhafter Weise Zwischenelemente zum Anstecken oder Anrasten des Steckgehäuses an Normschienen angebracht werden.

Die freien Enden der U-Schenkel der Profilschiene sind in vorteilhafter Weise zur Aufnahme von Halteelementen, wie Rastelementen oder Schrauben und/oder Bezeichnungsschildern, ausgebildet, wobei von den Steckmodulen seitlich abstehende Anschlagelemente im eingesteckten Zustand der Steckmodule in Anlage mit diesen Enden der U-Schenkel gelangen und mit diesen verbindbar sind. Hierdurch wird eine mechanisch stabile Verbindung zwischen Profilschiene und Steckmodulen gewährleistet und die Einstecktiefe in eine Profilschiene begrenzt.

Die Anschlußelemente mit den Stromversorgungsanschlüssen sind zweckmäßigerweise in der jeweiligen Längsposition der zugeordneten Eingabe-/Ausgabe-Steckmodule an der Profilschiene befestigt, die hierzu am äußeren Seitenbereich wenigstens eines ihrer U-Schenkel eine zur Steck- und/oder Rastaufnahme der Anschlußelemente ausgebildete Profilierung aufweist. Die zugeordneten Anschlußelemente können daher in einfacher Weise an die Profilschiene angesteckt und dabei mit dieser verrastet werden.

Die Steuer- und/oder Überwachungsanschlüsse an den Eingabe-/Ausgabe-Steckmodulen sind in vorteilhafter Weise als Steckanschlüsse zur Aufnahme einer Steckervorrichtung ausgebildet, die mit den externen Einrichtungen verbunden ist. Beim Austausch eines solchen Steckmoduls braucht daher lediglich die Steckervorrichtung herausgezogen, das Steckmodul durch Ein- und Ausstecken ausgetauscht und die Steckervorrichtung wieder eingesteckt werden. Eine Veränderung von Leitungsanschlüssen ist in keiner Weise erforderlich.

Zur Erweiterung einer Feldstation bei vollständig belegten Steckplätzen sind wenigstens eine zweite, mit einer Verteilereinrichtung versehene Haltevorrichtung und ein mit wenigstens einer Steckvorrichtung versehenes Verbindungselement zur Verbindung der beiden Verteilereinrichtungen vorgesehen, das in einen Steckplatz wenigstens einer der beiden Verteilereinrichtungen einsteckbar ist. Hierdurch können in einfacher Weise weitere Steckmodule zugefügt werden. Die zweite Haltevorrichtung kann entweder neben der ersten separat montiert werden, oder es erfolgt ein Zusammenstecken mittels Steckbolzen in den Längskanälen der Profilschienen, so daß praktisch eine beliebige Gehäuseverlängerung möglich ist.

Um ein Fehleinstecken von Steckmodulen zu verhindern, sind die Steckplätze der Verteilereinrichtung und/oder die darin einsteckbaren Steckmodule zweckmäßigerweise mit einer Fehleinsteckvorgänge verhindernden mechanischen Codiervorrichtung versehen. Hierdurch kann beispielsweise auch ein seitenverkehrtes Einstecken von Steckmodulen verhindert werden.

Die Eingabe-/Ausgabe-Steckmodule sind in vorteilhafter Weise mit einer optischen Anzeigevorrichtung zur Erkennung des Zustands der angeschlossenen externen Einrichtungen und/oder des Zustands des jeweiligen Steckmoduls selbst versehen. Diese optische Anzeigevorrichtung kann eine LED-Anordnung und/oder ein Display sein. Hierdurch ist in einfacher Weise beispielsweise schnell erkannbar, welche der angeschlossenen externen Einrichtungen aktiviert ist oder ob und wo Störungen und Fehler vorliegen.

Die verschiedenen Eingabe-/Ausgabe-Steckmodule sind zweckmäßigerweise für unterschiedliche Einsatzzwecke ausgebildet, das heißt, sie weisen parallele digitale Eingänge und/oder parallele digitale Ausgänge und/oder analoge Eingänge und/oder analoge Ausgänge und/oder serielle digitale Ein-/Ausgänge auf. Selbstverständlich sind auch Steckmodule mit gemischten Funktionen oder in Ausführungen als Funktionsmodule realisierbar.

Die Eingabe-/Ausgabe-Steckmodule und/oder das Kommunkations- und Steuer-Steckmodul sind vorzugsweise mit Schaltelementen zur Einstellung der Adressierung versehen. Hierdurch kann schnell und einfach die Adressierung eingestellt bzw. verändert werden.

Zur Erhöhung der Betriebssicherheit und zum Schutz der Anlage und seiner Einheiten sind in vorteilhafter Weise Potentialtrennvorrichtungen zur Potentialtrennung an den Anschlüssen der Steckmodule zu den externen Einrichtungen und/oder zum seriellen Bussystem hin vorgesehen. Vorzugsweise wird dabei eine galvanische Trennung mit einer Isolationsfestigkeit von beispielsweise 4,5 kV vorgesehen.

Zur störsicheren Datenübertragung weist das serielle Bussystem vorzugsweise zur Datenübertragung Lichtleiter auf.

Ein Ausführungsbeispiel der Erfindung ist in der Zeichnung dargestellt und in der nachfolgenden Beschreibung näher erläutert. Es zeigen:
- Fig. 1: eine Feldstation in einer Ansicht auf die Querseite, zum Teil als Querschnittsdarstellung,
- Fig. 2: eine Ansicht der Längsseite dieser Feldstation in Pfeilrichtung A,
- Fig. 3: eine Draufsicht auf diese Feldstation in der Pfeilrichtung B gemäß Fig. 1,
- Fig. 4: ein Verbindungselement zur elektrischen Verbindung von zwei als Leiterplatten ausgebildeten Verteilereinrichtungen in zwei Profilschienen und
- Fig. 5: ein Blockschaltbild dieser mit fünf Steckmodulen ausgerüsteten Feldstation.

Gemäß den Figuren besteht eine Feldstation 10 für ein von einem Steuercomputer 11 (Zentraleinheit) gesteuerten seriellen Bussystem aus einem Steckgehäuse 12 und fünf darin einsteckbaren Steckmodulen 13-17. Die Zahl der Steckmodule 13-17 und entsprechend die Länge des Steckgehäuses 12 ist in weitem Rahmen variierbar.

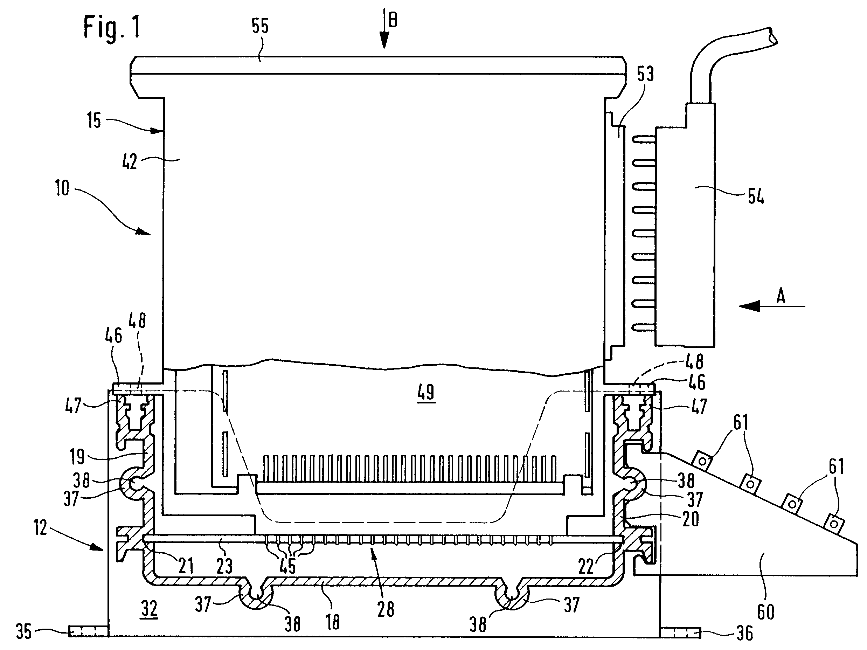

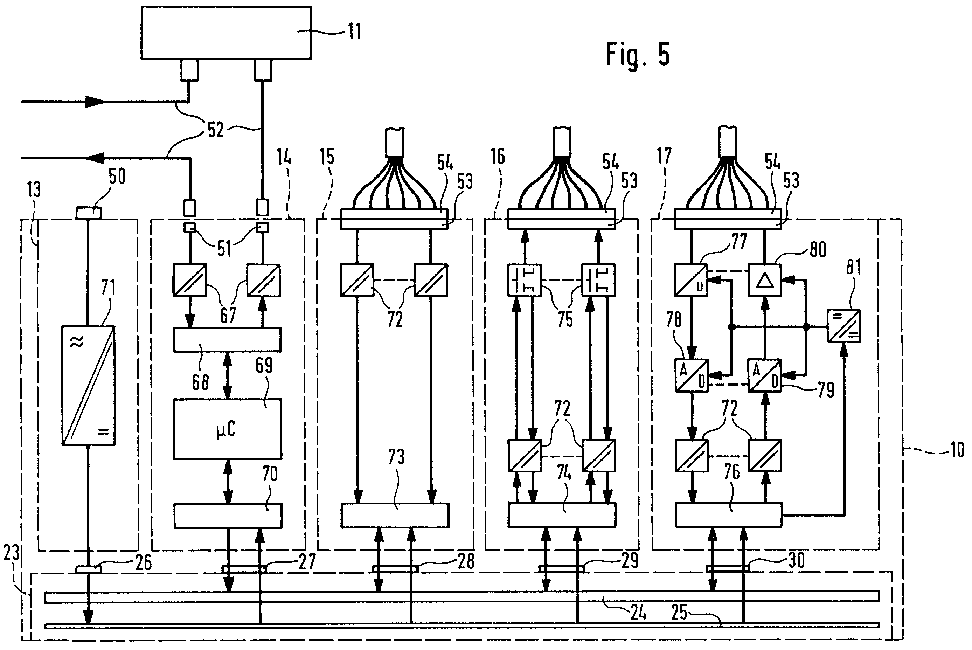

Das Steckgehäuse 12 besteht im wesentlichen aus einer Profilschiene 18 mit U-förmigem Querschnitt, die zur besseren Abschirmung aus Metall, beispielsweise aus Aluminium, besteht. Prinzipiell sind selbstverständlich auch Kunststofflösungen möglich, wobei der Kunststoff dann zur Abschirmung mit einer Metallbeschichtung versehen sein kann. Diese Profilschiene 18 kann entsprechend der Zahl der Steckmodule 13-17 abgelängt werden. Am unteren Bereich weisen die beiden U-Schenkel 19,20 der Profilschiene 18 an der Innenseite zwei Längsnuten 21,22 auf, in die eine als Leiterplatte 23 ausgebildete Verteilereinrichtung eingeschoben wird. Diese Leiterplatte 23 besitzt in Längsrichtung Busleitungen eines feldstationinternen Bussystems 24 sowie elektrische Versorgungsleitungen 25 für die einzelnen Steckmodule, wie dies in Verbindung mit Fig. 5 noch näher erläutert wird. Entsprechend der zum Teil unterschiedlichen Breite der Steckmodule 13-17 sind Steckplätze 26-30 auf dieser Leiterplatte 23 zum Einstecken der Steckmodule 13-17 vorgesehen. In Fig. 1 ist der Steckplatz 28 erkennbar, da die Teilschnittdarstellung den Schnitt durch die Profilschiene 18 zwischen den Steckmodulen 14 und 15 verkörpert, so daß der obere Bereich von Fig. 1 die Querseitendarstellung des Steckmoduls 15 beinhaltet.

Zur Bildung des Steckgehäuses 12 ist die in gewünschter Weise abgelängte Profilschiene an beiden Stirnseiten mit einer Abschlußplatte 31,32 versehen. In Fig. 1 ist dabei die Abschlußplatte 32 zum Teil sichtbar. Die verdeckten Begrenzungskanten sind gestrichelt dargestellt.

Die unteren Endbereiche dieser Abschlußplatten 31,32 sind in Längsrichtung gegeneinandergebogen, wobei seitliche Laschen 33-36 zur Schraubbefestigung der gesamten Feldstation 10 seitlich überstehen, wie dies in den Fig. 1 und 3 erkennbar ist. Anstelle einer derartigen Schraubbefestigung können auch Zwischenelemente an der Profilschiene 18 zum Anstecken oder Anrasten der Feldstation 10 an eine nicht dargestellte Normschiene angeordnet, d.h. eingeschoben, angeschraubt, angerastet oder angeklemmt sein. Die Profilschiene 18 weist vier Ausformungen 37 auf, je eine an den U-Schenkeln 19,20 und zwei am unteren Verbindungsbereich. Diese Ausformungen 37 schließen Längskanäle 38 ein, die zum Inneren der Profilschiene 18 hin einen Durchbruch aufweisen. Zur Befestigung der Abschlußplatten 31,32 an der Profilschiene 18 werden Schrauben 39 durch diese Abschlußplatten 31,32 in die Längskanäle 38 eingeschraubt, wodurch die Abschlußplatten 31,32 fest an der Profilschiene 18 fixiert werden und zusammen mit dieser das Steckgehäuse 12 bilden.

Die Steckmodule 13-17 besitzen jeweils ein Gehäuse 40-44, das an seiner dem Steckgehäuse 12 zugewandten Seite mit einer mehrpoligen Steckvorrichtung 45 versehen ist. An den beiden Schmalseiten weisen diese Gehäuse 40-44 rechtwinklig abstehende streifenförmige Anschlagelemente 46 auf, die beim Einstecken der Steckmodule 13-17 in Anlage mit den freien Endbereichen der U-Schenkel 19,20 der Profilschiene 18 gelangen. Diese Endbereiche 47 der U-Schenkel 19,20 sind mit Ausnehmungen zur Aufnahme von nicht dargestellten Befestigungsschrauben oder Rastelementen versehen. In diese längsnutenartigen Ausnehmungen können auch Bezeichnungsschilder zur jeweiligen Bezeichnung der Steckmodule 13-17 oder der gesamten Feldstation 10 eingesteckt bzw. eingerastet werden. Auch die Gehäuse 40-44 der Steckmodule 13-17 bzw. deren Deckel 55 können derartige Bezeichnungsschilder tragen, die durch Einrasten in entsprechende Ausnehmungen oder andere bekannte Befestigungsarten angebracht werden. So können beispielsweise die Deckel 55 mit Bezeichnungsschildern zur Bezeichnung der jeweiligen Steckmodule versehen werden, während die die Anschlüsse 53 tragenden Schmalseiten oder ein schräger Übergangsbereich zu diesen Bezeichnungsschilder tragen können, auf denen die einzelnen Bezeichnungen für die Anschlüsse 53 bzw. der Steckvorrichtungen 54 ablesbar sind. Die Anschlagelemente 46 sind ebenfalls mit entsprechenden Bohrungen 48 versehen, durch die die nicht dargestellten Befestigungsschrauben hindurchgesteckt und in die Endbereiche 47 eingeschraubt werden. Beim Einstecken der Steckmodule 13-17 in das Steckgehäuse 12 bis zum Anschlag der Anschlagelemente 46 an den Endbereichen 47 werden die Steckvorrichtungen 45 in die Steckplätze 26-30 eingesteckt, wodurch über das interne Bussystem 24 und die Versorgungsleitungen 25 automatisch die erforderlichen elektrischen Anschlüsse hergestellt sind. Die Anschlagelemente 46 fixieren die Steckmodule 13-17 im Steckgehäuse 12 und verhindern eine mechanische Belastung der Steckvorrichtungen 45 bzw. Steckplätze 26-30.

In den Gehäusen 40-44 der Steckmodule 13-17 sind Leiterplatten 49 fixiert, die die jeweiligen, nicht dargestellten elektronischen Bauelemente tragen. Die auf dieser Leiterplatte 49 realisierte elektronische Schaltung ist einerseits mit der Steckvorrichtung 45 und andererseits mit an einer Schmalseite des jeweiligen Steckmoduls 13-17 angeordneten Anschlüssen versehen, die bei den verschiedenen Steckmodulen 13-17 verschieden ausgebildet sind. Beim breiteren, als Netzteil ausgebildeten Steckmodul 13 handelt es sich hierbei um einen Netzanschluß 50 zum Anschluß an das Wechselstromnetz. Beim als Kommunikations- und Steuerteil ausgebildeten Steckmodul 14 handelt es sich um zwei serielle Busanschlüsse 51, die gemäß Fig. 1 über eine als Ringleitung ausgebildete serielle Busleitung 52 mit dem Steuercomputer 11 verbunden sind. In diese Ringleitung können noch beliebige weitere Feldstationen geschaltet werden, die vom Steuercomputer 11 aus in bekannter Weise gesteuert werden sollen. Bei den als Eingabe-/Ausgabe-Einheiten ausgebildeten Steckmodulen 15-17 handelt es sich bei diesen Anschlüssen um Eingabe-/Ausgabe-Anschlüsse 53 zum Anschluß von externen zu steuernden und/oder zu überwachenden Einrichtungen.

Diese externen, nicht dargestellten Einrichtungen werden gemäß Fig. 1 über eine Steckvorrichtung 54 mit den Eingabe-/Ausgabe-Anschlüssen 53 verbunden.

Die Gehäuse 40-44 weisen an ihrer vom Steckgehäuse 12 abgewandten Seite einen abnehmbaren Deckel 55 auf, an dem im Falle des Steckmoduls 14 ein Display 56, zwei Kontrollleuchten 57 und eine Schalteranordnung 58 angeordnet sind. Die Steckmodule 15-17 tragen ebenfalls derartige Schalteranordnungen 58 sowie Reihen von Kontrolleuchten 59. Das Display 56, die Kontrolleuchten 57,59 sowie die Schalteranordnungen 58 können jeweils am Deckel 55 oder an den Leiterplatten 49 befestigt sein, wobei im zweiten Falle ein optischer Zugang über Öffnungen im Deckel 55 möglich ist. Die Schalteranordnung 58 kann alternativ z.B. auch auf der Seite der Eingabe-/Ausgabe-Anschlüsse 53 angeordnet sein.

Die Schalteranordnung 58 dient zur jeweiligen Adressierung der Steckmodule 14-17 bzw. zur Änderung der Adressierung. Durch das Display 56 und die Kontrolleuchten 57 kann eine Zustandsanzeige und/oder eine Fehleranzeige für das als Kommunikations- und Steuereinheit ausgebildete Steckmodul 14 erfolgen. Bei den als Eingabe-/Ausgabe-Einheiten ausgebildeten Steckmodulen 15-17 dienen die Kontrolleuchten 57 zur Angabe des Zustands bzw. Schaltzustands der angeschlossenen externen Einrichtungen und/oder zur Fehleranzeige bzw. -diagnose.

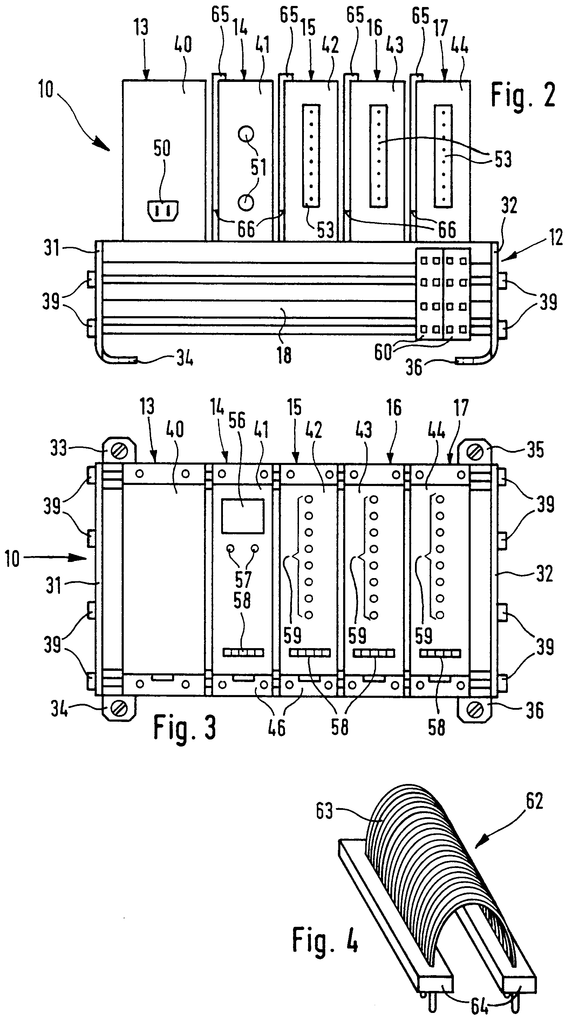

Die Außenseiten der U-Schenkel 19,20 der Profilschiene 18 sind so profiliert, daß Anschlußelemente 60 seitlich angesteckt und eingerastet werden können. Diese Anschlußelemente 60 dienen zur Stromversorgung der an die Steckmodule 15-17 angeschlossenen externen Einrichtungen. Das jeweils zugeordnete Anschlußelemente 60 ist dabei in der Längsposition des jeweiligen Steckmoduls fixiert. Beispielsweise sind gemäß Fig. 2 zwei solcher Anschlußelemente 60 in der Längsposition des Steckmoduls 17 fixiert, um acht externe Einrichtungen mit der notwendigen Betriebsspannung zu versorgen. Die Anschlußelemente 60 sind untereinander über nicht dargestellte Stromversorgungsleitungen verbunden, die mit einer Stromversorgungseinrichtung verbunden sind. Die Anschlußelemente 60 tragen für den Anschluß der externen Einrichtungen erforderliche Anschlußklemmen 61. Die Anschlußelemente können gemäß Fig. 1 nur an einem Schenkel 20 der Profilschiene 18 angeordnet sein, wobei selbstverständlich auch eine beidseitige Anordnung an beiden Schenkeln 19,20 möglich ist, um eine größere Zahl von Anschlüssen unterzubringen. Entsprechend können auch zwei Anordnungen von Anschlüssen 53 an beiden Schmalseiten der Gehäuse 42-44 vorgesehen sein, um eine größere Zahl von externen Einrichtungen über zwei Steckvorrichtungen 54 anschließen zu können.

Bei der Konzeption einer derartigen Feldstation 10 wählt man die Länge zweckmäßigerweise so, daß noch freie Steckplätze in der Leiterplatte 23 vorgesehen sind, um später noch Steckmodule hinzufügen zu können. Sind jedoch alle Steckplätze belegt, so kann eine Erweiterung dieser Feldstation dadurch erfolgen, daß ein zweites Steckgehäuse mit einer die Bus- und Versorgungsleitungen tragenden Leiterplatte in Längsrichtung an das Steckgehäuse 12 angefügt wird, wobei der letzte Steckplatz des Steckgehäuses 12 mit dem ersten Steckplatz des weiteren Steckgehäuses 12 mittels des in Fig. 4 dargestellten Verbindungselements 62 verbunden wird. Dieses Verbindungselement 62 besteht aus einem Bandkabel 63, das an beiden Enden mit Steckvorrichtungen 64 versehen ist. Hierdurch werden die Leitungen auf den beiden Leiterplatten elektrisch miteinander verbunden.

Anstelle des in Fig. 4 dargestellten Verbindungselements 62 kann auch ein Verbindungselement treten, das nur mit einer Steckvorrichtung 64 versehen ist und das am zweiten, zur Erweiterung der Feldstation dienenden Steckgehäuse bzw. an dessen Leiterplatte fest angeschlossen, also z.B. verlötet ist. Dieses Verbindungselement braucht dann lediglich in den letzten Steckplatz des Steckgehäuses 12 oder in einen separaten Steckplatz eingesteckt werden, der ausschließlich für diesen Zweck vorgesehen ist und dadurch einfacher und platzsparender ausgebildet sein kann.

Zur Erweiterung des Steckgehäuses 12 kann ein weiteres, völlig separates Steckgehäuse in Längsrichtung angefügt werden, oder die Abschlußplatte 32 wird abgenommen und das anzufügende Steckgehäuse wird mit dem Steckgehäuse 12 dadurch verbunden, daß die miteinander zu verbindenden Stirnseiten der Profilschienen 18 in den Längskanälen 38 Steck- bzw. Schraubbolzen aufweisen, so daß die Profilschienen in Längsrichtung aneinander fixierbar sind.

Um ein falsches Einstecken von Steckmodulen 13-17 zu verhindern, sind die Steckvorrichtungen 45 bzw. die Steckplätze 26-30 durch entsprechende Anordnung der Steckerstifte so codiert, daß nur ein korrektes Einstecken eines Steckmoduls an dem dafür vorgesehenen Platz möglich ist. Ein Austausch der als Eingabe-/Ausgabe-Einheiten ausgebildeten Steckmodule 15-17 ist selbstverständlich möglich. Alternativ hierzu können auch andere bekannte mechanische Codiereinrichtungen vorgesehen sein.

Um die angeschlossenen externen Einrichtungen, Anschlußkonfigurationen oder Einstellungen zu dokumentieren, weisen die Steckmodule 14-17 gemäß Fig. 2 jeweils an einer Breitseite herausziehbare Tafeln 65 auf, auf denen die entsprechenden Eintragungen gemacht werden können. Zur Nachprüfung wird die jeweilige Tafel 65 herausgezogen und um eine Gelenkstelle 66 umgelegt, so daß sie z.B. parallel am Deckel 55 anliegt und abgelesen werden kann. Danach wird sie wieder in ihre ursprüngliche Position eingesteckt. Zur Vereinfachung wurde in den Fig. 1 und 3 auf die Darstellung dieser Tafeln 65 verzichtet.

Bei dem in Fig. 5 dargestellten Blockschaltbild der Feldstation 10 sind bereits beschriebene Elemente und Einrichtungen mit denselben Bezugszeichen versehen.

Als Bussystem kann insbesondere der genormte Feldbus Sercos verwendet werden, bei dem die serielle Busleitung 52 als optische Busleitung ausgebildet ist. An den Steuercomputer 11 bzw. an die Zentraleinheit können bis zu 254 Feldstationen 10 in einer Ringschaltung angeschlossen werden. Selbstverständlich können auch andere bekannte Bussysteme zur seriellen Datenübertragung vom Steuercomputer 11 zu den Feldstationen 10 verwendet werden.

In dem als Kommunikations- und Steuereinheit ausgebildeten Steckmodul 14 werden die ankommenden optischen Signale über Optokoppler 67 in elektrische Signale umgewandelt bzw. umgekehrt. Die ankommenden bzw. abgehenden Signale werden dabei in einer feldbusspezifischen ASIC-Schaltung 68 (Feldbus-Interface) gebildet. Von dort gelangen die ankommenden Signale zu einem Mikrorechner 69 bzw. von dort aus werden Signale über die ASIC-Schaltung 68 über die Busleitung 52 dem Steuercomputer 11 zugeführt bzw. rückgemeldet. Ein Busansteuerungs- und Logik-Schaltkreis 70 dient dabei als Schnittstelle zum internen Bussystem 24, über das die ankommenden Signale den Steckmodulen 15-17 zugeführt oder dort eingehende Signale zum Steckmodul 14 rückgeführt werden können. Der Mikrocomputer 69 kann eine feste, systemorientierte Programmierung aufweisen, es ist prinzipiell jedoch auch möglich, eine Programmierung bzw. Umprogrammierung vom Steuercomputer 11 aus über die seriellen Busleitungen 52 zu vollziehen.

Das als Netzteil ausgebildete Steckmodul 13 enthält eine Spannungsaufbereitungsschaltung 71, die über die Versorgungsleitungen 25 die einzelnen Steckmodule mit den erforderlichen Versorgungsgleichspannungen versorgt.

Das Steckmodul 15 weist parallele digitale Eingänge zum Anschluß von nicht dargestellten Näherungsschaltern, Tastern, Endschaltern, Druck- und Temperaturwächtern od.dgl. auf. Diese werden über die Steckvorrichtung 54 angeschlossen. Die eingehenden digitalen Signale werden über optische Potentialtrennvorrichtungen 72 einem Busansteuerungs- und Logik-Schaltkreis 73 zugeführt, über den die Verbindung mit dem internen Bussystem 24 erfolgt. Anstelle einer optischen Potentialtrennvorrichtung 72 können auch andere bekannte Potentialtrennvorrichtungen eingesetzt werden.

Das Steckmodul 16 weist parallele digitale Ausgänge zum Anschluß von Magnetventilen, Magnetkupplungen, Bremsen, Motoren, Kontrollampen od.dgl. auf. Auch hier ist wiederum ein entsprechender Busansteuerungs- und Logik-Schaltkreis 74 vorgesehen, der mit optischen Potentialtrennvorrichtungen 72 verbunden ist, von denen zur Vereinfachung nur zwei dargestellt sind. In einer praktischen Ausführung sind beispielsweise acht solcher Potentialtrennvorrichtungen 72 bzw. Ausgangskanälen vorgesehen. Diese Potentialtrennvorrichtungen 72 sind mit ausgangsseitigen Schaltvorrichtungen 75 zur Steuerung der angeschlossenen externen Einrichtungen verbunden. Dabei erfolgt eine Rückmeldung des Schaltzustands der Schaltvorrichtungen 75, Fehlermeldungen, Statusmeldungen u.dgl. an das interne Bussystem 24 bzw. an das Steckmodul 14.

Das Steckmodul 17 ist mit analogen Eingängen und analogen Ausgängen versehen, von denen zur Vereinfachung nur jeweils einer dargestellt ist. Die analogen Eingänge dienen zur Erfassung von Meßgrößen über Sensoren zur Erfassung beispielsweise der Drehzahl, des Wegs, der Temperatur, des Drucks, der Kraft, der Spannung, des Stroms od.dgl., während die analogen Ausgänge Stellgrößen zur Steuerung des Durchflusses, des Drehwinkels, der Drehzahl, von Analoganzeigen od.dgl. ausgeben. Hierzu sind wiederum an einen entsprechenden Busansteuerungs- und Logik-Schaltkreis 76 optische Potentialtrennvorrichtungen 72 angeschlossen, wobei im Falle von analogen Eingängen die eingehenden Signale über eine Potentialanpassungsstufe 77 und einen A/D-Wandler 78 den jeweiligen Potentialtrennvorrichtungen 72 zugeführt werden. Andererseits werden im Falle von analogen Ausgängen die ausgehenden Signale über die Potentialtrennvorrichtungen 72, D-/A-Wandler 79 und Ausgangsverstärker 80 den Ausgängen bzw. den Ausgangsanschlüssen 53 zugeführt. Ein DC-/DC-Wandler 81 dient zur Potentialtrennung von Versorgungsspannungen für die Baugruppen 77-80 und wird vom Busansteue rungs- und Logik-Schaltkreis 76 bzw. von der Versorgungsleitung 25 aus versorgt. Dieser DC-/DC-Wandler 81 kann auch entfallen, wenn eine entsprechende externe Stromversorgung über die Steckvorrichtung 54 erfolgt.

Ein weiteres, nicht dargestelltes Steckmodul kann noch serielle digitale Ein- und/oder Ausgänge enthalten zur Ansteuerung von Druckern, Anzeigen, Terminals, intelligenten Peripheriegeräten od.dgl. Weiterhin ist es möglich, spezielle Steckmodule vorzusehen, die gemischte Ein- und Ausgänge aufweisen, insbesondere für kleinere Anwendungen, bei denen die Zahl der einzelnen Ein- und Ausgänge gering ist. Ist diese Zahl dagegen sehr groß, kann selbstverständlich die Zahl der Steckmodule praktisch beliebig erweitert werden, wie vorstehend bereits beschrieben wurde. Weitere Steckmodule können als Funktionsmodule ausgebildet sein, z.B. als Zählermodule, Zeitmodule, Module für Maßsysteme od.dgl.

## Patentansprüche

1. Feldstation für ein von einem Steuercomputer gesteuertes serielles Bussystem, wie ein Lichtleiter-Bussystem, mit einer Stromversorgungseinrichtung, mit wenigstens einer Eingabe-/Ausgabeeinrichtung, an die externe zu steuernde und/oder zu überwachende Einrichtungen anschließbar sind, und mit einer an den seriellen Bus anschließbaren und die Kommunikation zwischen diesem und der wenigstens einen Eingabe-/Ausgabeeinrichtung herstellenden Kommunikations- und Steuereinrichtung, dadurch gekennzeichnet, daß in einer Haltevorrichtung (18) eine mehrere, durch interne Bus- und und Versorgungsleitungen (24, 25) verbundene Steckplätze (26 - 30) aufweisende Verteilereinrichtung (23) angeordnet ist, daß die Stromversorgungseinrichtung, die wenigstens eine Eingabe-/Ausgabeeinrichtung und die Kommunikations- und Steuereinrichtung als in die Steckplätze (26 - 30) einsteckbare Steckmodule (13 - 17) ausgebildet sind und daß das wenigstens eine Eingabe-/Ausgabe-Steckmodul (28 - 30) mit Steuer- und/oder Überwachungsanschlüssen (53) für die externen zu steuernden und/oder zu überwachenden Einrichtungen versehen ist.

2. Feldstation nach Anspruch 1, dadurch gekennzeichnet, daß die Verteilereinrichtung (23) als Leiterplatte ausgebildet ist.

3. Feldstation nach Anspruch 1 oder 2, dadurch gekennzeichnet, daß jedem Eingabe-/Ausgabe-Steckmodul (15 - 17) wenigstens ein Anschlußelement (60) zugeordnet ist, das Stromversorgungsanschlüsse (61) für die mit diesem Eingabe-/Ausgabe-Steckmodul (15 - 17) verbundenen externen Einrichtungen aufweist, wobei alle Anschlußelemente (60) stromversorgungsmäßig miteinander verbunden sind.

4. Feldstation nach einem der vorhergehenden Ansprüche, dadurch gekennzeichnet, daß die Haltevorrichtung als Profilschiene (18) mit im wesentlichen U-förmigem Querschnitt ausgebildet ist, die insbesondere als Längsnuten zum Einschieben der Verteilereinrichtung (23) ausgebildete Halterungen (21) zur Aufnahme der Verteilereinrichtung (23) im Innenbereich aufweist.

5. Feldstation nach Anspruch 4, dadurch gekennzeichnet, daß die Profilschiene (18) durchgehende Längskanäle (38) als Schraub- oder Steckaufnahmen zur Befestigung von Abschlußelementen (31, 32) und/oder von Profilschienen (18) in Längsrichtung aneinander aufweist.

6. Feldstation nach Anspruch 5, dadurch gekennzeichnet, daß die Abschlußelemente (31, 32) als Abschlußplatten ausgebildet sind, die insbesondere mit Haltefüßen (33 - 36) oder -leisten zur Befestigung der Feldstation (10) versehen sind.

7. Feldstation nach einem der Ansprüche 1 bis 6, dadurch gekennzeichnet, daß die Haltevorrichtung (18) mit Zwischenelementen zum Anstecken oder Anrasten an Normschienen versehen ist.

8. Feldstation nach einem der Ansprüche 4 bis 7, dadurch gekennzeichnet, daß die freien Enden der U-Schenkel (19, 20) der Profilschiene (18) zur Aufnahme von Halteelementen (39), wie Rastelementen oder Schrauben und/oder von Bezeichnungsschildern, ausgebildet sind, wobei von den Steckmodulen (13 - 17) seitlich abstehende Anschlagelemente (46) im eingesteckten Zustand der Steckmodule (13 - 17) in Anlage mit den Enden (47) der U-Schenkel (19, 20) stehen und mit diesen verbindbar sind.

9. Feldstation nach Anspruch 3 sowie einem der Ansprüche 4 bis 8, dadurch gekennzeichnet, daß die Anschlußelemente (60) in der jeweiligen Längsposition der zugeordneten Eingabe-/Ausgabe-Steckmodule (15 - 17) an der Profilschiene (18) befestigt sind, wobei die Profilschiene (18) am äußeren Seitenbereich wenigstens einer ihrer U-Schenkel (20) vorzugsweise eine zur Steck- und/oder Rastaufnahme der Anschlußelemente (60) ausgebildete Profilierung aufweist.

10. Feldstation nach einem der vorhergehenden Ansprüche, dadurch gekennzeichnet, daß die Steuer- und/oder Überwachungsanschlüsse (53) an den Eingabe-/Ausgabe-Steckmodulen (15 - 17) als Steckanschlüsse zur Aufnahme einer Steckervorrichtung (54) ausgebildet sind, die mit den externen Einrichtungen verbunden ist.

11. Feldstation nach einem der vorhergehenden Ansprüche, dadurch gekennzeichnet, daß zur Erweiterung einer Feldstation (10) wenigstens eine zweite, mit einer Verteilereinrichtung versehene Haltevorrichtung vorgesehen ist, und daß ein mit wenigstens einer Steckvorrichtung (64) versehenes elektrisches Verbindungselement (62) zur Verbindung der beiden Verteilereinrichtungen vorgesehen ist, das in einen Steckplatz wenigstens einer der beiden Verteilereinrichtungen einsteckbar ist.

12. Feldstation nach einem der vorhergehenden Ansprüche, dadurch gekennzeichnet, daß die Steckplätze (26 - 30) der Verteilereinrichtung (23) und/oder die darin einsteckbaren Steckmodule (13 - 17) mit einer Fehleinsteckvorgänge verhindernden mechanischen Codiervorrichtung versehen sind.

13. Feldstation nach einem der vorhergehenden Ansprüche, dadurch gekennzeichnet, daß die Eingabe-/Ausgabe-Steckmodule (15 - 17) und/oder das Kommunikations- und Steuer-Steckmodul (14) mit einer vorzugsweise aus einer LED-Anordnung und/oder einem Display bestehenden optischen Anzeigevorrichtung (59, 56, 57) zur Erkennung des Zustandes der angeschlossenen externen Einrichtungen und/oder des Zustandes des jeweiligen Eingabe-/Ausgabe-Steckmoduls (14 - 17) selbst versehen sind.

14. Feldstation nach einem der vorhergehenden Ansprüche, dadurch gekennzeichnet, daß Bezeichnungsschilder für die Steckmodule (13 - 17) und/oder deren Anschlüsse (53) an den Gehäusen (40 - 44) ansteckbar oder anrastbar sind.

15. Feldstation nach einem der vorhergehenden Ansprüche, da-durch gekennzeichnet, daß verschiedene Eingabe-/Ausgabe-Steckmodule (15 - 17) für unterschiedliche Einsatzzwecke ausgebildet sind und insbesondere parallele digitale Eingänge und/oder parallele digitale Ausgänge und/oder analoge Eingänge und/oder analoge Ausgänge und/oder serielle digitale Ein-/Ausgänge aufweisen.

16. Feldstation nach einem der vorhergehenden Ansprüche, dadurch gekennzeichnet, daß die Eingabe-/Ausgabe-Steckmodule (15 - 17) und/oder das Kommunikations- und/oder Steuer-Steckmodul (14) mit Schaltelementen (58) zur Einstellung der Adressierung versehen sind.

17. Feldstation nach einem der vorhergehenden Ansprüche, dadurch gekennzeichnet, daß Potentialtrennvorrichtungen (67, 72) zur Potentialtrennung an den Anschlüssen der Steckmodule (14 - 17) zu den externen Einrichtungen und/oder zum seriellen Bussystem hin vorgesehen sind.
